# EUROPEAN PATENT APPLICATION

(11) **EP 1 883 215 A1**
(43) Date of publication of application: **30.01.2008**
(21) Application number: 07102476.4
(22) Date of filing: 15.02.2007
(51) Int. Cl.: H04M 1/72

(54) **Screen displaying method of mobile terminal**

(30) Priority: 27.07.2006 KR 20060070889
(71) Applicant: Samsung Electronics Co., Ltd., Suwon-si, Gyeonggi-Do (KR)
(72) Inventor: Kim, Kyung-min, Gangseo-gu Seoul (KR)
(74) Representative: Zimmer, Franz-Josef

(57) **Abstract**

A method of displaying an image on a mobile terminal includes inputting a first signal (S10), which turns on a screen of a mobile terminal, to the mobile terminal, counting for a predetermined first amount of time starting from when the first signal is input (S20), and selecting an image corresponding to a current time from among a plurality of stored images (S40) and displaying the selected image when no signal is input to the mobile terminal within the first amount of the time (S50). Accordingly, it is possible to provide a user with not only time/weather (Fig.4) information but also a lot of fun while reflecting the user's sensitivity by providing various temporal images or weather information images corresponding to time zones to the user via a mobile terminal.

## Description

Aspects of the present invention relate to a method of changing a screen saver in a mobile terminal according to time, and more particularly, to a method of providing a user with various screen saver images corresponding to time zones, whereby the user can receive not only time/weather information but also have a lot of fun provided while reflecting the user's sensitivity.

As mobile communication technology that uses a mobile phone, a PDA, MP3 players, IMT2000 compatible devices, or WiBro compatible devices has advanced, a mobile terminal has attained an important position as means for the purposes of ordinary life and business affairs. However, when using a mobile terminal, predetermined text or characters are generally displayed on the screen (LCD) of the mobile terminal in a standby mode. Thus, since a signal is displayed on only a particular part of the LCD, the life of the LCD is shortened and it is difficult to deliver a remarkable meaning or sign to a user. Thus, the user would feel bored. Also, when the screen of the mobile terminal is turned on for a large amount of time, power consumption is increased.

It is the object of the present invention to provide a method of displaying an image corresponding to each of time zones in a mobile device by using a screen saver while reflecting a user's sensitivity.

This object is solved by the subject matter of the independent claims.

Preferred embodiments are defined in the dependent claims.

Aspects of the present invention provide a method of displaying an image corresponding to a weather condition of each of time zones in a mobile device by using a screen saver.

According to an aspect of the present invention, there is provided a method of displaying an image on a mobile terminal, the method comprising inputting a first signal which turns on a screen of the mobile terminal, counting for a predetermined first amount of time starting from an instant of time when the first signal is input, and selecting an image corresponding to a current time from among a plurality of stored images and displaying the selected image when no signal is input to the mobile terminal for the first amount of the time.

According to an aspect of the present invention, the current time is indicated in the form of a digital watch or an analog watch, and the selected image is displayed together with the current time.

According to an aspect of the present invention, an image corresponding to the current time is selected by checking a shape or a location of the sun or the moon included in each of the stored images.

According to an aspect of the present invention, an image corresponding to the current time is selected by checking a background color of each of the stored images, and an image having a blue background is selected in the morning, and an image having a red background is selected in the afternoon.

According to another aspect of the present invention, there is provided a method of displaying an image on a mobile terminal, the method comprising inputting a first signal which turns on a screen of the mobile terminal, and selecting an image corresponding to a current time from among a plurality of stored images, and displaying the selected image.

According to another aspect of the present invention, there is provided a method of displaying an image on a mobile terminal, the method comprising receiving weather information from an external source; inputting a first signal which turns on a screen of the mobile terminal; counting for a predetermined first amount of time starting from an instant of time when the first signal is input; selecting an image corresponding to the received weather information from among a plurality of stored images and displaying the selected image when no signal is input to the mobile terminal for the first amount of the time.

According to an aspect of the present invention, the weather information is received in real time or at predetermined intervals.

According to an aspect of the present invention, the selected image corresponds to a weather condition a predetermined amount of time after current time.

According to an aspect of the present invention, the current time and the predetermined amount of the time are indicated in the form of a digital watch or an analog watch, and the selected image is displayed together with the current time and the predetermined amount of the time.

According to another aspect of the present invention, there is provided a method of displaying information on a mobile terminal, the method comprising receiving weather information from an external source, inputting a first signal which turns on a screen of the mobile terminal, and selecting an image corresponding to the received weather information from among a plurality of stored images and displaying the selected image.

According to another aspect of the present invention, there is provided a mobile terminal comprising an image storage unit storing a plurality of images, a screen display unit which is turned on when a predetermined first signal is input, and a controller selecting an image corresponding to a current time from among a plurality of stored images and displaying the selected image on the screen display unit, when no signal is input for predetermined first amount of time starting from an instant of time when the first signal is input.

According to another aspect of the present invention, there is provided a mobile terminal comprising an image storage unit storing a plurality of images, a screen display unit which is turned on when a predetermined first signal is input, and a controller selecting an image corresponding to a current time from among the stored images and displaying the selected image on the screen display unit when the first signal is input.

According to another aspect of the present invention, there is provided a mobile terminal comprising a receiving unit receiving weather information from an external source, an image storage unit storing a plurality of images, a screen display unit which is turned on when a predetermined first signal is input, and a controller selecting an image corresponding to the received weather information from among the stored images and displaying the selected image on the screen display unit, when no signal is input for a predetermined first amount of time starting from an instant of time when the first signal is input.

According to another aspect of the present invention, there is provided a mobile terminal comprising a receiving unit receiving weather information from an external source, an image storage unit storing a plurality of images, a screen display unit which is turned on when a predetermined first signal is input, and a controller selecting an image corresponding to the received weather information from among the stored images and displaying the selected image on the screen display unit, when the first signal is input.

According to another aspect of the present invention, there is provided a computer readable medium having recorded thereon a computer program for executing a method of displaying an image in a mobile terminal.

Additional aspects and/or advantages of the invention will be set forth in part in the description which follows and, in part, will be obvious from the description, or may be learned by practice of the invention.

The above object and other aspects and/or advantages of the present invention will become more apparent and more readily appreciated by describing in detail exemplary embodiments thereof with reference to the accompanying drawings in which:
FIG. 1 is a block diagram of a mobile terminal according to an embodiment of the present invention;
FIG. 2 is a flowchart illustrating a method of displaying an image on the mobile terminal of FIG. 1 according to an embodiment of the present invention;
FIGS. 3A through 3D illustrate examples of screen saver images stored in an image storage unit of the mobile terminal of FIG. 1 according to an embodiment of the present invention;
FIGS. 4A through 4D illustrate other examples of screen saver images stored in an image storage unit of the mobile terminal of FIG. 1 according to an embodiment of the present invention;
FIG. 5 is a flowchart illustrating a method of displaying an image on a mobile terminal according to an embodiment of the present invention;
FIG. 6 is a block diagram of a mobile terminal according to an embodiment of the present invention;
FIG. 7 is a flowchart illustrating a method of displaying an image on the mobile terminal of FIG. 6 according to an embodiment of the present invention;
FIGS. 8A through 8C illustrate examples of screen saver images stored in an image storage unit of the mobile terminal of FIG. 6 according to an embodiment of the present invention; and
FIG. 9 is a flowchart illustrating a method of displaying an image on a mobile terminal according to an embodiment of the present invention.

Hereinafter, a mobile apparatus and method according to embodiments of the present invention will be described in detail, examples of which are illustrated in the accompanying drawings. Like reference numerals denote like elements throughout the specification.

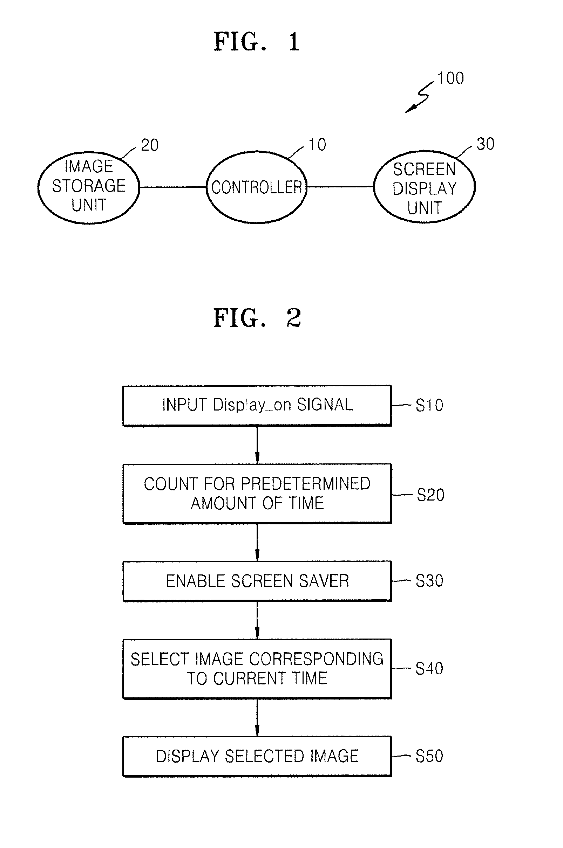

FIG. 1 is a block diagram of a mobile terminal 100 according to an embodiment of the present invention. As illustrated in FIG. 1, the mobile terminal 100 includes a controller 10, an image storage unit 20, and a screen display unit 30. The controller 10 controls the overall operation of the mobile terminal 100. When no signal is input while the screen display unit 30 is switched on, the controller 10 controls an image corresponding to a current time to be displayed on the screen display unit 30. The screen display unit 30 can be a single screen or one of multiple screens on the mobile terminal 100, such as where the mobile terminal has a claim shell design. While not required in all aspects, the current time is determined from an internal clock of the mobile terminal 100 and/or from a clock signal broadcast over the network and which the mobile terminal 100 detects to determine the current time.

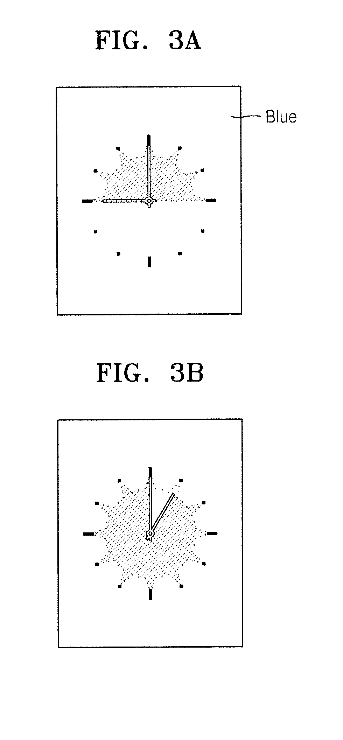

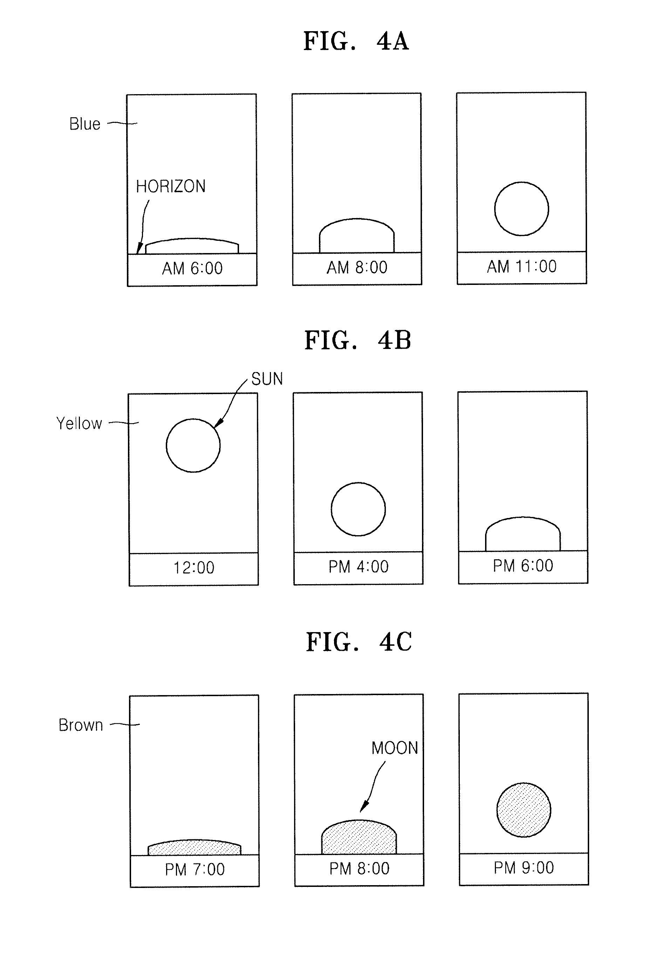

The image storage unit 20 stores various images to be displayed as screen savers on the screen display unit 30. In particular, the shown image storage unit 20 stores various images corresponding to time zones and/or time periods, which help recognize the current time. Such images will later be described in greater detail with reference to FIGs. 3A through 3D and FIGs. 4A through 4D. When a screen saver is enabled, the screen display unit 30 displays an image corresponding to the current time, which is selected by the controller 10. While not required, the image storage unit 20 can be an internal memory and/or a detachable storage memory, such as an SD card, readable by an internal drive.

A method of displaying an image on the mobile terminal 100 of FIG. 1, in which a screen saver is set, will now be described with reference to FIG. 2 according to an embodiment of the present invention. When a display-on signal to turn on the screen display unit 30 is input to the mobile terminal 100 (S10), the controller 10 counts for a predetermined amount of time (S20). By way of example, the display on signal can be when any key of the mobile terminal 100 is pressed or the folder of the mobile terminal 100 is opened, the display-on signal is input, thus turning on the screen display unit 30.

When no signal is input to the mobile terminal 100 within the predetermined amount of time after the display on signal, a screen saver is enabled (S30). By way of example, the lack of signal can be for when a user does not press any key of the mobile terminal 100 within the predetermined amount of time while the screen display unit 30 is turned on, whereby the screen saver is enabled so as to reduce power consumption and protect the screen display unit 30. The predetermined amount of time can be set by a user, can be a default time, and/or can be no time or a short time to allow the screen saver to start immediately in aspects of the invention. Moreover, the lack of the signal need not preclude any signal from being input, but can be limited to a lack of only certain types of signals, such as specific key combinations through a keypad and/or touch screen display inputs as compared to keypad inputs.

Where the predetermined time is reached without the key being depressed, the controller 10 selects an image corresponding to the current time from a plurality of images stored in the image storage unit 20 (S40), and displays the selected image on the screen display unit 30 (S50). While not required, the selection can be based on a time period (such as afternoon, morning), and/or location as detected from the time zone of the terminal 100.

The image storage unit 20 stores various images corresponding to time zones, which will be described in greater detail with reference to FIGs. 3A through 3D and FIGs. 4A through 4D. FIGs. 3A through 3D illustrate examples of screen saver images stored in the image storage unit 20 of the mobile terminal 100 of FIG. 1 according to an embodiment of the present invention. Referring to FIGs. 3A through 3D, the image storage unit 20 divides a day into four time periods: morning, afternoon, evening, and night, and stores various images corresponding to the four time periods. However, the numbers of time periods and corresponding images are not limited. For instance, the time periods can include meal times, working times, seasons, sleeping times, or other periods of interest to the user.

FIG. 3A illustrates an image representing a morning period from 6 a.m. to 11 a.m., in which the sun is on the rise. In the image of FIG. 3A, time is indicated in the form of an analog watch, a red sun is gradually on the rise in a center portion of the image, and the background color is set to blue so as to express from dawn to morning. That is, the image shows a sunrise on an assumption that a line connecting 3 o'clock and 9 o'clock of the analog watch is the horizon.

FIG. 3B illustrates an image representing an afternoon period from 11 a.m. to 5 p.m., in which the sun rises. The image of FIG. 3B shows that the red sun rises to full height in the center portion of the image, so that a user can realize that the current time is afternoon.

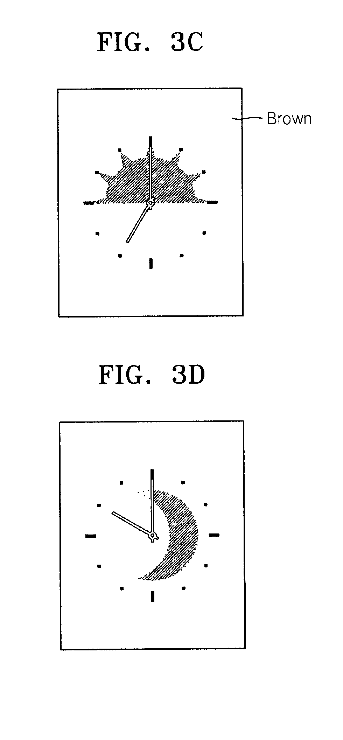

FIG. 3C illustrates an image representing an evening zone from 5 p.m. to 8 p.m., in which the sun is going down. In the image of FIG. 3C, the red sun is gradually going down from the center portion of the image, and the background color is set to brown so as to express that the sky is bright with the evening glow.

Lastly, FIG. 3D illustrates an image representing a night zone from 8 p.m. to 6 a.m., in which the moon rises. The image of FIG. 3D shows that a young moon rises to full height in the center portion of the image, so that the user can realize that the current time is in a late night.

As described above, referring to FIGS. 3A through 3D, a day is divided into four time periods: morning, afternoon, evening, and night, with corresponding images being changed as the current time moves between the time periods. Further, the current time is represented in an analog manner. However, as illustrated in FIGs. 4A through 4D, a day may be divided into more than four time zones and the current time be represented in a digital manner. FIGS. 4A through 4D are diagrams illustrating examples of screen saver images stored in the image storage unit 20 of the mobile terminal 100 of FIG. 1 according to an embodiment of the present invention.

FIG. 4A illustrates an image representing a morning period from 6 a.m. to 11 a.m., in which the sun is on the rise. In the image of FIG. 4A, time is indicated in the form of a digital watch, the sun is gradually coming up from the horizon on an assumption that the lowermost part of the image is the horizon, and the background color is set to blue in order to express the refreshing feeling of the morning. That is, the image shows that the sun starts to rise from the horizon at 6 a.m., the sunrise continues thus revealing a considerable part of the sun at 8 a.m., and the sun completely reveals its figure at 11 a.m.

FIG. 4B illustrates an image representing an afternoon period from 12 p.m. to 6 p.m., in which the sun has already risen. In the image of FIG. 4B, the red sun is gradually going down to the horizon on an assumption that the lowermost part of the image is the horizon, and the background color is set to yellow so as to express the warm feeling of the afternoon. That is, the sun is displayed at the uppermost part of the screen display unit 40 at noon so as to express that the sun rises to full height, is gradually going down at 4 p.m., and is suspended on the horizon right before sunset at 6 p.m.

FIG. 4C illustrates an image representing an evening period from 7 p.m. to 9 p.m., in which the moon in on the rise. Referring to FIG. 4C, the moon is gradually on the rise from the horizon on an assumption that the lowermost part of the image is the horizon, and the background color is set to brown so as to express that the sky is bright with the evening glow. That is, the moon is gradually coming up at 7 p.m., the moon rise continues thus revealing a considerable part of the moon at 8 p.m., and the moon completely reveals its figure at 9 p.m.

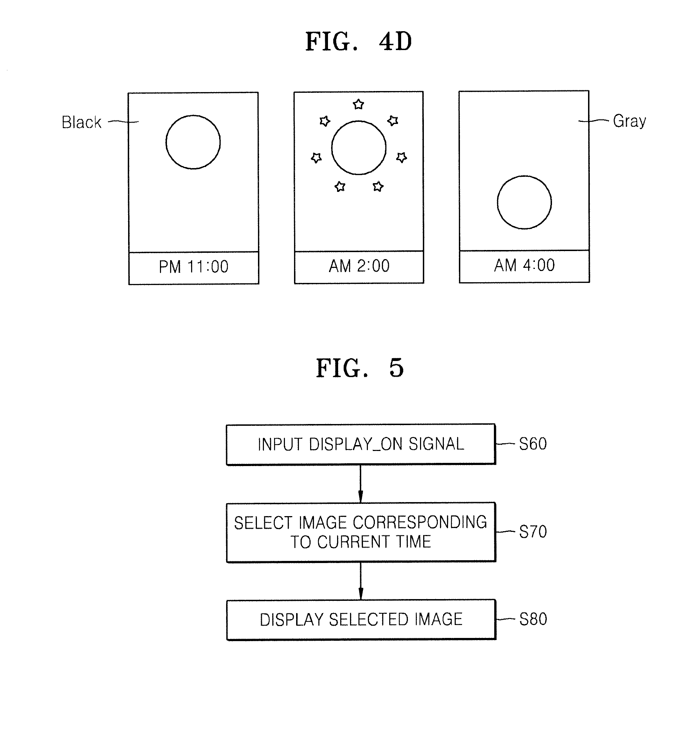

FIG. 4D illustrates an image representing the moon in a night period from 11 p.m. to 4 a.m. As illustrated in FIG. 4D, the background color is set to black in order to express midnight. Specifically, the moon rises in the black sky at 11 p.m., stars twinkle around the moon at 2 a.m., the color of the moon changes to transparent at 4 a.m., and the background image is set to gray in order to express a daybreak.

As described above, referring to FIGs. 4A through 4D, a day is subdivided more than in FIGs. 3A through 3D. Meanwhile, the moon may be illustrated as a young moon or a half moon according to which date is today, and the figure and time of the sunrise may be variously determined according to month, depending on time when the sun rises all the year. Further, the colors can be varied according to settings by the user and/or to reflect a color the sky at sunrise, sunset in other examples. Further, additional images, such as water, trees, can be added in the horizon in aspects of the invention.

FIG. 5 is a flowchart illustrating a method of displaying an image on the mobile terminal 100 according to an embodiment of the present invention. While not required in all aspects, the construction of the mobile terminal 100 is the same as that of the mobile terminal 100 of FIG. 1, except that a screen saver is not set in the mobile terminal 100 as in operations S20 and S30 of FIG. 2.

A display-on signal that turns on a screen display unit 30 is input to the mobile terminal 100 (any key of the mobile terminal is pressed or the folder of the mobile terminal is opened), thus turning on a screen display unit 30 (S60). Then, the controller 10 selects an image corresponding to the current time from among a plurality of images stored in an image storage unit (S70), and displays the selected image on the screen display unit 30 (S80). Examples of the images stored in the image storage unit 20 have been described above with reference to FIGs. 3A through 3D and FIGs. 4A through 4D.

As described above, according to the embodiment of the present invention of FIG. 5, it is possible to obtain image information corresponding to a current time. However, it is understood that the selection can be by time zone in addition or by other geographic locator, which would allow image information corresponding to cities and/or regions at different times to be displayed.

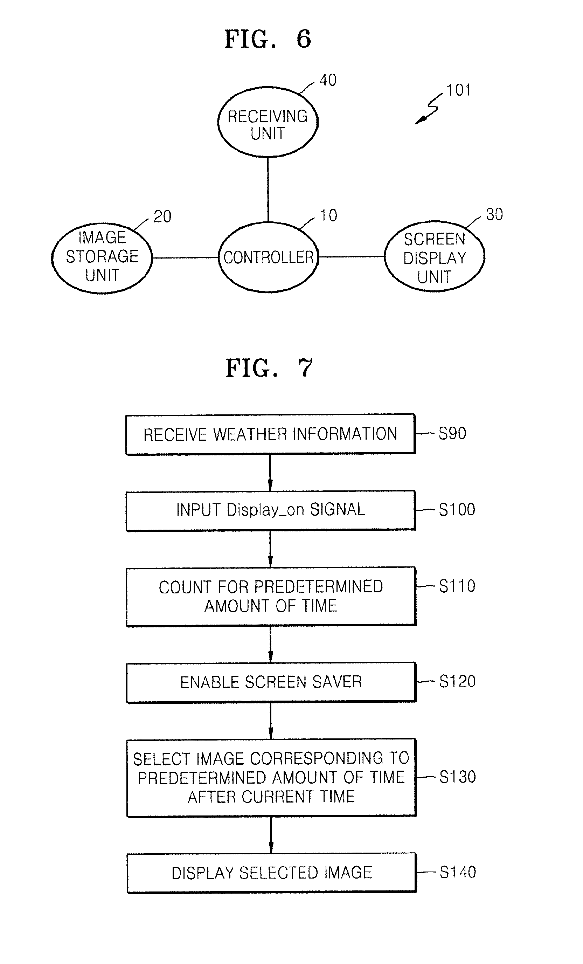

A method of displaying future weather information by using a screen saver, will now be described with reference to FIG.6. FIG. 6 is a block diagram of a mobile terminal 101 according to an embodiment of the present invention. As illustrated in FIG. 6, the mobile terminal 101 in which a screen saver is set, includes a controller 10, an image storage unit 20, a screen display unit 30, and a receiving unit 40. The functions and constructions of the controller 10, the image storage unit 20, and the screen display unit 30 of the mobile terminal 101 are generally the same as those of the controller 10, the image storage unit 20, and the screen display unit 30 of the mobile terminal 100 illustrated in FIG. 1.

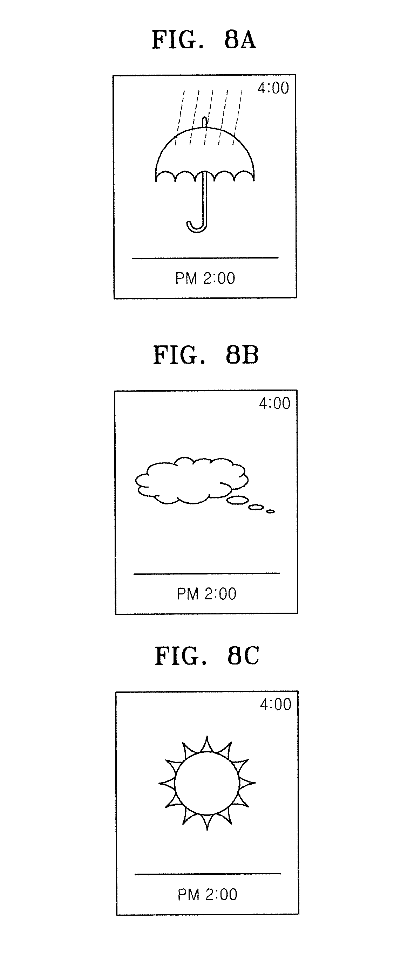

Referring to FIG. 6, the controller 10, which controls the overall operation of the mobile terminal 101, allows weather information corresponding to a predetermined instant of time to be displayed on the screen display unit 30 when no signal is input to the mobile terminal 101 within a predetermined amount of time while the screen display unit 30 is turned on. The image storage unit 20 stores various images to be displayed as screen savers. In particular, the image storage unit 20 stores various images corresponding to possible weather conditions after the selected instant of time, which will later be described in greater detail with reference to FIGs. 8A through 8D.

When the screen saver is enabled, the screen display unit 30 displays an image corresponding to a current forecast weather condition, which is selected by the controller 10. The receiving unit 40 receives the current forecast weather information beforehand from a weather forecast management server or a weather forecast service company, and delivers the weather information to the controller 10. The forecast for the weather can be for any amount of time in the future (such as one hour, one day), and/or can be for a current weather as opposed to forecasted weather. As such, the current forecast can also be used to display current weather or emergency weather alerts.

A method of displaying an image on the mobile terminal 101, illustrated in FIG. 6, in which a screen saver is set, will now be described with reference to FIG. 7 according to an embodiment of the present invention. The mobile terminal 101 receives weather information in real time from a weather forecast management server or a weather forecast service company service company, via the receiving unit 40 (S90). In this case, the weather information may be received in real time or at predetermined units of time.

Next, when a display-on signal that turns on the screen display unit 30 is input to the mobile terminal 101 (S100), the controller 10 counts for a predetermined amount of time (S110). For example, when any key of the mobile terminal 101 is pressed or the folder of the mobile terminal 101 is opened, the display-on signal is input and the screen display unit 30 is turned on.

Thereafter, when no signal is input to the mobile terminal 101 within the predetermined amount of time, the screen saver is enabled (S120). By way of example, when a user does not press any key of the mobile terminal 101 within the predetermined amount of time while the screen display unit 30 is turned on, the screen saver is enabled in order to reduce power consumption and protect the screen display unit 30. In this case, the controller 10 selects an image corresponding to the weather condition of a set instant of time from among various image stored in the image storage unit 20 (S130), and displays the selected image on the screen display unit 30 (S140).

The mobile terminal 101 is capable of acquiring in real time not only weather information at a desired time, but also weather information at time when a predetermined amount of time lapses from the current time. For example, when a user desires to receive weather information forecast for time two hours from the current time, the user can receive in real time the weather information forecast when two hours lapse from the current time by selecting "after two hours" when setting a screen saver. Thus, the weather information reception in S90 can occur after operation S100 in aspects of the invention and be updated after operation S140.

The image storage unit 20 stores various images corresponding various weather conditions, which will now be described in greater detail with reference to FIGs. 8A through 8C. FIGs. 8A through 8C illustrate examples of screen saver images stored in the image storage unit 20 of the mobile terminal 101 of FIG. 6 according to the embodiment of the present invention shown in FIG. 7. Referring to FIGs. 8A through 8C, current time is displayed at a lower part of each image, an amount of time set by a user is displayed at an upper part of each image, and weather information at time when the amount of time lapses from the current time is displayed in a center portion of each image. However, it is understood that the forecast time periods can be for other times, such as a five day forecast, and can include other locations in addition to or instead of a present locations.

As shown in FIG. 8A, the weather is predicted to be rainy. In FIG. 8B, the weather is predicted to be cloudy. In FIG. 8C, the weather is predicted to be sunny. While not shown, other information (such as temperature, wind speed, or pressure) can be displayed.

According to the embodiment of the present invention shown in FIG. 6, it is possible to display weather information at time when a predetermined amount of time lapses from current time by using a screen saver, thereby enabling a user to predict a weather change at time when the predetermined amount of time lapses from the current time.

The method of displaying an image on the mobile terminal 101 according to the embodiment of the present invention shown in FIG. 6, is applicable to a case where a screen saver is not set in the mobile terminal 101. Thus, the screen saver is dependent on external information received through the receiving unit 6.

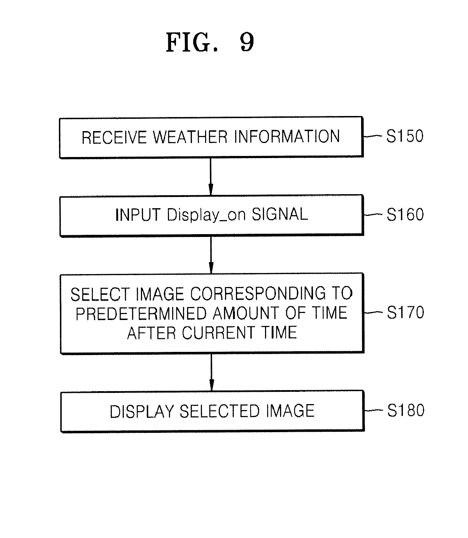

FIG. 9 is a flowchart illustrating a method of displaying an image on a mobile terminal according to an embodiment of the present invention. Here, the construction of the mobile terminal is the same as those of the mobile terminal 101 illustrated in FIG. 6, except that a screen saver is not set therein as in operations S110 and S120 of FIG. 7. First, the mobile terminal 101 receives weather information from a weather forecast management server or a weather forecast service company via the receiving unit 40 in real time (S150). In this case, the weather information may be received in real time or in a predetermined unit of time.

When a display-on signal that turns on the screen display unit 30 (when any key of the mobile terminal is pressed or the folder of the mobile terminal 101 is opened) is input to the screen display unit, thus turning on the screen display unit 30 (S160). Then, the controller 10 selects an image corresponding to the weather condition at a set instant of time from among a plurality of images stored in an image storage unit 20 (S170), and displays the selected image on the screen display unit 30 (S180).

The images stored in the image storage unit have been described above with reference to FIGS. 8A through 8C.

According to the embodiment of the present invention shown in FIG. 9, it is possible to directly obtain weather information corresponding to time when a predetermined amount of time lapses from current time in advance without using a screen saver, thereby predicting a weather change corresponding to time when the predetermined amount of time lapses from the current time.

According to the shown embodiments of the present invention in FIGs. 1-9, it is possible to set such that an image, which is stored in the image storage unit 20 and displayed on the screen display unit 30, is not to be displayed after a predetermined amount of time. However, it is understood that other displays can be set, such as based upon events (holidays, birthdays, anniversaries), images to reveal identities of missed calls or messages, or to display other information such as traffic information, bus and aircraft arrival information, news, etc. Further, while described in terms of images, it is understood that the images can be groups of images and/or animations displayed within specified time periods and/or weather conditions.

A method of displaying an image on a mobile terminal according to an embodiment of the present invention can be embodied as a computer readable program. Code and code segments that constitute the program can be easily derived by computer programmers in the technical field to which the present invention pertains. Here, the computer readable medium may be any recording apparatus capable of storing data that is read by a computer system, e.g., a read-only memory (ROM), a random access memory (RAM), a compact disc (CD)-ROM, a magnetic tape, a floppy disk, an optical data storage device, and so on. Also, the computer readable medium may be a carrier wave that transmits data via the Internet, for example. The computer readable medium can be distributed among computer systems that are interconnected through a network, and the present invention may be stored and implemented as computer readable code in the distributed system.

While not restricted thereto, it is understood that the mobile terminal can be a phone, ad PD (with or without wireless access), a media player, a portable computer, a personal navigation device, etc.

As described above, according to aspects of the present invention, various temporal images or weather information images corresponding to time zones can be provided to a user via a mobile terminal. Therefore, it is possible to provide the user with not only receive time/weather information but also a lot of fun while reflecting the user's sensitivity.

While this invention has been particularly shown and described with reference to exemplary embodiments thereof, it will be understood by those skilled in the art that various changes in form and details may be made therein without departing from the scope of the invention as defined by the appended claims.

## Claims

1. A method of displaying an image on a mobile terminal, the method comprising:
inputting a first signal which turns on a screen of the mobile terminal;
selecting an image corresponding to a current time from among a plurality of stored images; and
displaying the selected image on the screen.

2. The method of claim 1, comprising:
waiting a predetermined first amount of time after an instant of time when the first signal is input, wherein said step of displaying is performed when no signal is input to the mobile terminal during the waiting for the first predetermined amount of the time.

3. The method of claim 1 or 2, wherein the step of displaying further comprises:
displaying the current time in the form of a digital watch or an analog watch, and
displaying the selected image together with the current time.

4. The method of one of claims 1 to 3, wherein the step of selecting the image corresponding to the current time comprises:
comparing a shape or a location of a sun or a moon included in each of the stored images with the current time, and
selecting the image with the shape and/or the location of the sun or the moon having a greatest correspondence to the current time.

5. The method of one of claims 1 to 3, wherein the step of selecting the image corresponding to the current time comprises:
checking a background color of each of the stored images,
selecting the image having a blue background when the current time is in a morning time, and
selecting the image having a red background when the current time is in an afternoon time.

6. A method of displaying information on a mobile terminal, comprising:
receiving at the mobile terminal weather information transmitted from an external source;
inputting a first signal which turns on a screen of the mobile terminal;
selecting an image corresponding to the received weather information from among a plurality of stored images; and
displaying the selected image on the screen.

7. The method of claim 6, further comprising:
waiting a predetermined first amount of time after an instant of time when the first signal is input;
wherein said step of displaying is performed when no signal is input to the mobile terminal during the waiting for the predetermined first amount of the time.

8. The method of claim 6 or 7, wherein the step of receiving the weather information comprises receiving the weather information in real time and/or at predetermined intervals.

9. The method of one of claims 6 to 8, wherein the step of selecting the image comprises selecting an image that corresponds to a weather condition predicted to occur at a predetermined amount of time after a current time.

10. The method of claim 9, wherein the step of displaying the selected image comprises
displaying the current time and the predetermined amount of the time in the form of a digital watch or an analog watch, and
displaying the selected image together with the current time and the predetermined amount of the time.

11. A method of displaying an image on a mobile terminal, comprising:
after a screen of the mobile terminal is turned on, determining in the mobile terminal a current time;
selecting an image corresponding to the determined current time for use as a screen saver, the image being selected from among a plurality of images stored on the mobile terminal which correspond to corresponding different time periods; and
displaying the selected image corresponding to the current time on the screen as the screen saver.

12. The method of claim 11, wherein:
at least one of the images corresponds to a first time period,
at least another one of the images corresponds to a second time period,
the first time period includes the current time, and
the selecting the image comprises determining the current time is in the first time period of the at least one image, and retrieving the selected at least one image.

13. The method of claim 12, further comprising again determining another current time, and selecting a further one of the images corresponding to the determined another current time for use as the screen saver, wherein the another image corresponds to the second time period, and the second time period includes the another current time.

14. A method of displaying an image on a mobile terminal, comprising:
after a screen of the mobile terminal is turned on, determining in the mobile terminal current weather information;
determining which one of a plurality of weather conditions corresponds to the determined current weather information;
selecting an image for use as a screen saver according to the determined weather condition, the image being selected from among a plurality of images stored on the mobile terminal which correspond to corresponding different weather conditions; and
displaying the selected image corresponding to the current weather information on the screen as the screen saver.

15. The method of claim 14, wherein:
at least one of the images corresponds to a first weather condition,
at least another one of the images corresponds to a second weather condition, the first weather condition includes the current weather information, and
the selecting the image comprises determining the current weather information is for the first weather condition of the at least one image, and retrieving the selected at least one image.

16. The method of claim 15, further comprising again determining another current weather information, and selecting a further one of the images corresponding to the determined another current weather information for use as the screen saver, wherein the another image corresponds to the second weather condition, and the second weather condition includes the another current weather information.

17. The method of one of claims 11 to 16, further comprising displaying a current time with the image in the screen saver.

18. The method of one of claims 11 to 17, wherein the step of displaying the current time comprises displaying the current time as an analog clock with the selected image in the screen saver.

19. The method of one of claims 11 to 18, wherein the step of displaying the current time comprises displaying the current time as a digital clock with the selected image in the screen saver.

20. The method of one of claims 11 to 19, wherein the current weather information comprises a weather forecast for weather predicted to occur in a future time.

21. The method of one of claims 11 to 19, wherein the current weather information comprises information regarding a weather condition presently occurring.

22. A mobile terminal comprising:
an image storage unit for storing a plurality of images;
a screen display unit which is turned on when a predetermined first signal is input; and
a controller for selecting an image corresponding to a current time from among the plurality of stored images, and displaying the selected image on the screen display unit.

23. The mobile terminal of claim 22, wherein the controller is adapted to display the selected image when no signal is input for predetermined first amount of time after an instant of time when the predetermined first signal is input.

24. The mobile terminal of claim 22 or 23, wherein the screen display unit is adapted to display the selected image together with the current time, the current time being displayed in the form of a digital watch or an analog watch.

25. The mobile terminal of one of claims 22 to 24, wherein the controller is adapted to select an image corresponding to the current time by checking a shape or a location of a sun or a moon included in each of the stored images, and selects the image having a greatest correspondence to the current time.

26. The mobile terminal of one of claims 22 to 24, wherein the controller is adapted to select an image corresponding to the current time by checking a background color of each of the stored images, to select the image having a blue background color when the current time is in a morning time, and to select the image having a red background color when the current time is in an afternoon time.

27. The mobile terminal of claim 22, wherein the controller is adapted to display the selected image when the predetermined first signal is input.

28. The mobile terminal of claim 27, wherein the controller is further adapted to display on the screen display unit the current time in the form of a digital watch or an analog watch, and the current time being displayed together with the selected image on the screen display unit.

29. The mobile terminal of claim 27 or 28, wherein the controller is further adapted to select the image corresponding to the current time by checking a shape or a location of the sun or the moon included in each of the stored images, and to select the image which best corresponds to the current time.

30. The mobile terminal of claim 27 or 28, wherein the controller is further adapted to select an image corresponding to the current time by checking a background color of each of the stored images, to select the image having a blue background when the current time is in a morning time, and to select the image having a red background when the current time is in an afternoon time.

31. A mobile terminal comprising:
a receiving unit receiving weather information from an outside source;
an image storage unit storing a plurality of images;
a screen display unit which is turned on when a predetermined first signal is input; and
a controller selecting an image corresponding to the received weather information from among the stored images, and displaying the selected image on the screen display unit.

32. The mobile terminal of claim 31, wherein the controller is adapted to display the selected image when no signal is input for a predetermined first amount of time after an instant of time when the predetermined first signal is input.

33. The mobile terminal of claim 31, wherein the controller is adapted to display the selected image when the predetermined first signal is input.

34. The mobile terminal of one of claims 31 to 33, wherein the weather information is received in real time or at predetermined intervals.

35. The mobile terminal of one of claims 31 to 33, wherein the selected image corresponds to a weather condition predicted to occur a predetermined amount of time after a current time.

36. The mobile terminal of claim 35, wherein the current time and the predetermined amount of the time are displayed on the screen display unit together with the selected image, the current time and the predetermined amount of the time being displayed in the form of a digital watch or an analog watch.

37. The mobile terminal of claim 35, wherein the screen display unit displays the selected image with the current time and the predetermined amount of the time, the current time and the predetermined amount of the time being displayed in the form of a digital watch or an analog watch.

38. A computer readable medium having recorded thereon computer executable instructions for implementing a method of displaying an image on a mobile terminal performed by a computer, according to one of claims 1 to 21.

39. The computer-readable medium of claim 38, where said method further comprises counting for a predetermined first amount of time starting from an instant of time when the first signal is input.

40. A mobile terminal comprising:
a screen on which information is conveyed and on which a screen saver is displayed;
a clock unit to determine a current time;
a memory to store a plurality of images for use in the screen savers, each of the images being associated with a corresponding time period; and
a controller to, after the screen is turned on, determine with which of the time periods the current time corresponds, to select one of the stored images corresponding to the determined time period, and to display the selected image on the screen as the screen saver.

41. The mobile terminal of claim 40, wherein the controller is adapted, after the screen saver is displayed, to detect an input and stops the display of the screen saver after the input is detected.

42. The mobile terminal of claim 40 or 41, wherein the controller is adapted to display the current time with the image in the screen saver.

43. A mobile terminal comprising:
a screen on which information is conveyed and on which a screen saver is displayed;
a memory to store a plurality of images for use in the screen savers, each of the images being associated with a corresponding weather condition; and
a controller to, after the screen is turned on, detect weather information, to determine with which of the weather conditions the weather information corresponds, to select one of the stored images corresponding to the determined weather condition, and to display the selected image on the screen as the screen saver.

44. The mobile terminal of claim 43, wherein the controller is adapted to display a current time with the image in the screen saver.

45. The mobile terminal of claim 43 or 44, wherein the current weather information comprises a weather forecast for weather predicted to occur in a future time.

46. The mobile terminal of one of claims 43 to 45, wherein the current weather information comprises information regarding a weather condition presently occurring.
